# EUROPEAN PATENT APPLICATION

(11) **EP 4 300 734 A1**
(43) Date of publication of application: **03.01.2024**
(21) Application number: 23178415.8
(22) Date of filing: 09.06.2023
(51) Int. Cl.: H02B 7/06, H02B 1/56, H01F 27/02

(54) **PREFABRICATED SUBSTATION**

(30) Priority: 29.06.2022 CN 202221643583 U
(71) Applicant: Sungrow Power Supply Co., Ltd., Hefei, Anhui 230088 (CN)
(72) Inventor: PAN, Hanfei, Hefei, Anhui, 230088 (CN); ZHANG, Xianwei, Hefei, Anhui, 230088 (CN); ZHU, Qiyao, Hefei, Anhui, 230088 (CN)
(74) Representative: Biallo, Dario

(57) **Abstract**

A prefabricated substation includes a low-voltage cabinet (1) and a housing (4). The housing (4) includes a low-voltage chamber for accommodating the low-voltage cabinet (1). The low-voltage cabinet (1) is an outdoor cabinet, and the low-voltage chamber is a structural frame. The low-voltage cabinet (1), which is the outdoor cabinet, can be used outdoors directly without additional protection. A part of the housing (4) (that is, the low-voltage chamber) is the structural frame, so that available space inside the low-voltage chamber is significantly increased compared with the existing low-voltage chamber which is enclosed, thereby maximizing arrangement of switches inside low-voltage chamber and reducing costs.

## Description

### FIELD

The present disclosure relates to the technical field of substations, and in particular to a prefabricated substation.

### BACKGROUND

Substations for photovoltaic power generation, also known as box-type transformer substations, are generally pre-installed in containers so as to integrate low-voltage cabinets, transformers, ring main units and the like. The containers are normally standard shipping containers in order to meet requirements of marine transportation, thereby improving transportation efficiency and reducing transportation costs. The substations are increasing in capacity as the photovoltaic industry develops, resulting in increasingly high utilization of space inside the substations due to limitations on the size of the standard shipping container and costs.

The low-voltage cabinet in the substations is generally provided with safety switches and air circuit breakers. The safety switches are connected to an alternating-current output end of a string inverter and the air circuit breakers, so as to combine low-voltage alternating-current power. The capacity of a substation depends on the number of the safety switches provided to the low-voltage cabinet in the substation. A low-voltage chamber enclosed with a welded partition, a welded roof, and an openable door is generally arranged inside the substation. Multiple low-voltage cabinets are arranged inside the low-voltage chamber and therefore are protected by the low-voltage chamber when used outdoors.

However, the welded partition, the welded roof and the openable door of the low-voltage chamber result in not only a reduction in available space for safety switches provided to the low-voltage cabinets but also high costs. Further, the multiple low-voltage cabinets inside the low-voltage chamber are too numerous to be arranged and connected to each other.

### SUMMARY

In view of this, a prefabricated substation is provided according to the present disclosure, so as to maximize available space at the low-voltage side.

In order to maximize available space at the low-voltage side, the following technical solutions are provided according to the present disclosure.

A prefabricated substation includes a low-voltage cabinet and a housing. The housing includes a low-voltage chamber for accommodating the low-voltage cabinet. The low-voltage cabinet is an outdoor cabinet, and the low-voltage chamber is a structural frame.

In an embodiment, the prefabricated substation includes a cabinet body and a door body. The cabinet body is provided with an operable surface. The door body is arranged on the operable surface, and is uncovered.

In an embodiment, the prefabricated substation further includes a transformer arranged inside the housing. The cabinet body is further provided with an inoperable surface, and the cabinet body is electrically connected to the transformer through the inoperable surface.

In an embodiment, the operating surface includes a first operable surface, a second operable surface and a third operable surface. The first operable surface is opposite to the inoperable surface. The second operable surface and the third operable surface are arranged on opposite sides of the first operable surface, respectively. The door body includes a first door body arranged on the first operable surface, a second door body arranged on the second operable surface, and a third door body arranged on the third operable surface.

In an embodiment, the first operable surface includes a first area and a second area. The first door body includes a first door and a second door. The first door is arranged in the first area, and the second door is arranged in the second area.

In an embodiment, a molded case circuit breaker and an air circuit breaker are arranged in the cabinet body. The molded case circuit breaker includes first molded case circuit breakers arranged in the first area, second molded case circuit breakers arranged in the second area, third molded case circuit breakers arranged on the second operable surface, and fourth molded case circuit breakers arranged on the third operable surface. The air circuit breaker includes a first air circuit breaker arranged in the first area and a second air circuit breaker arranged in the second area.

In an embodiment, all the first molded case circuit breakers and the third molded case circuit breakers are electrically connected to the first air circuit breaker, and all the second molded case circuit breakers and the fourth molded case circuit breakers are electrically connected to the second air circuit breaker. In another embodiment, the first molded case circuit breakers are arranged in layers, the second molded case circuit breakers are arranged in layers, the first molded case circuit breakers in a first layer and the second molded case circuit breakers in a first layer form a first layer of molded case circuit breakers, and the first molded case circuit breakers in a second layer and the second molded case circuit breakers in a second layer form a second layer of molded case circuit breakers. The first layer of molded case circuit breakers and the third molded case circuit breakers are electrically connected to the first air circuit breaker, and the second layer of molded case circuit breakers and the fourth molded case circuit breakers are electrically connected to the second air circuit breaker. Alternatively, the first layer of molded case circuit breakers and the fourth molded case circuit breakers are electrically connected to the first air circuit breaker, and the second layer of molded case circuit breakers and the third molded case circuit breakers are electrically connected to the second air circuit breaker.

In an embodiment, the door body is provided with a heat exchanger for cooling the cabinet body.

In an embodiment, the heat exchanger is a countercurrent heat exchanger and is provided with an air inlet and an air outlet for external circulation. An air outlet and an air inlet for internal circulation are provided inside the cabinet body. A direction in which air flows through the air inlet and the air outlet is opposite to a direction in which air flows through the air outlet and the air inlet.

In an embodiment, the prefabricated substation further includes a ring main unit. The ring main unit is arranged inside a medium-voltage power distribution chamber in the housing. The ring main unit is an indoor cabinet, and the medium-voltage power distribution chamber is enclosed. Alternatively, the ring main unit is an outdoor cabinet, and the medium-voltage power distribution chamber is a structural frame.

It can be seen from the above technical solutions that, in the prefabricated substation according to the present disclosure the low-voltage cabinet is an outdoor cabinet, and the part of the housing where the low-voltage cabinet is arranged is a structural frame, maximizing available space on the low-voltage side and significantly reducing the costs. The switches are arranged on three operable surfaces on a front side, a left side and a right side of the low-voltage cabinet respectively, making full use of operable surfaces, thereby maximizing the number of the switches. Further, the heat exchanger is arranged on the door, facilitating dissipation of heat inside the cabinet body.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.
Figure 1 is a schematic structural diagram illustrating a prefabricated substation according to an embodiment of the present disclosure;
Figure 2 is a schematic structural diagram illustrating a low-voltage cabinet from a front perspective (with a door body being hidden) according to an embodiment of the present disclosure;
Figure 3 is a schematic structural diagram illustrating the low-voltage cabinet from a left perspective (with a door body being hidden) according to an embodiment of the present disclosure;
Figure 4 is a schematic structural diagram illustrating the low-voltage cabinet from a right perspective (with a door body being hidden) according to an embodiment of the present disclosure; and
Figure 5 is a schematic structural diagram illustrating the low-voltage cabinet from an axonometric perspective according to an embodiment of the present disclosure.

In the drawings:

| | | | |
|---|---|---|---|
| 1 | low-voltage cabinet; | 11 | first operable surface; |
| 111 | first area; | 112 | second area; |
| 113 | first layer of molded case circuit breakers; | | |
| 114 | second layer of molded case circuit breakers; | | |
| 115 | first door; | 116 | second door; |
| 12 | second operable surface; | 121 | second door body; |
| 13 | third operable surface; | 131 | third door body; |
| 2 | transformer; | 3 | ring main unit; |
| 4 | housing; | 51 | first molded case circuit breaker; |
| 52 | second molded case circuit breaker; | 53 | third molded case circuit breaker; |
| 54 | fourth molded case circuit breaker; | 61 | first air circuit breaker; |
| 62 | second air circuit breaker; | 7 | heat exchanger; |
| 8 | connection copper bar. | | |

### DETAILED DESCRIPTION

The technical solutions in the embodiments of the present disclosure are described clearly and completely in conjunction with the drawings of the embodiments of the present disclosure hereinafter. It is apparent that the described embodiments are only some rather than all embodiments of the present disclosure. Any other embodiments obtained by those skilled in the art based on the embodiments in the present disclosure without any creative effort shall fall within the protection scope of the present disclosure.

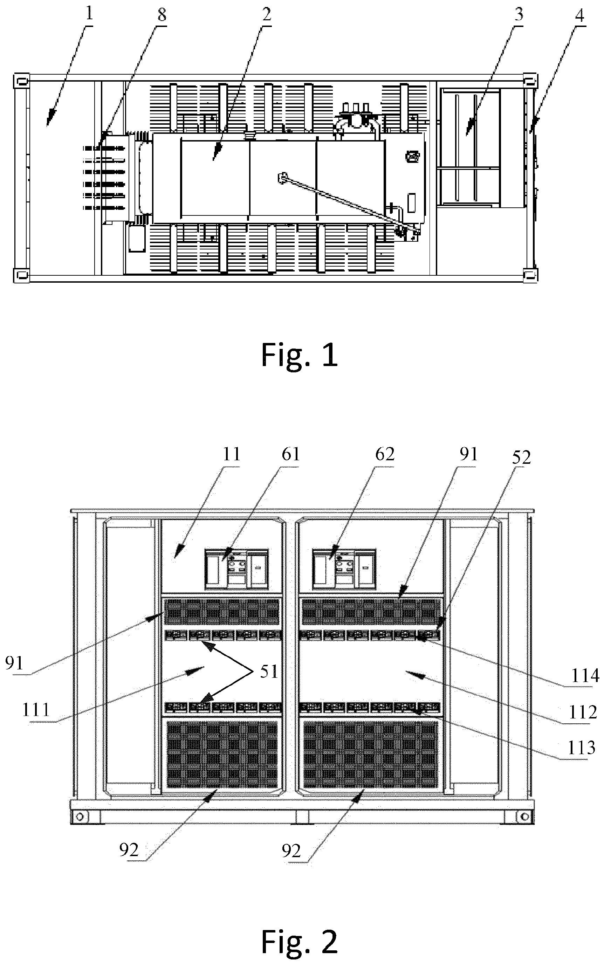

A prefabricated substation is provided according to an embodiment of the present disclosure. The prefabricated substation includes a low-voltage cabinet 1 and a housing 4, as shown in Figure 1.

The housing 4 includes a low-voltage chamber for accommodating the low-voltage cabinet 1.

The low-voltage cabinet 1 is an outdoor cabinet, that is, has a protective structure, and therefore unnecessarily enclosed by the housing 4 for protection. The low-voltage chamber is a structural frame without being enclosed.

It can be seen from the above technical solutions that in the prefabricated substation according to the embodiment of the present disclosure, the low-voltage cabinet 1 is an outdoor cabinet and thus can be directly used outdoors without additional protection. The housing 4 is provided with a structural frame (that is, the low-voltage chamber). Therefore, available space for switches provided to the low-voltage cabinet 1 is increased and costs are reduced compared with the existing low-voltage chamber enclosed with walls.

In an embodiment, the low-voltage cabinet 1 includes a cabinet body and a door body.

The cabinet body is provided with an operable surface. The door body is arranged on the operable surface, and the door body is uncovered. That is, the door body serves as the protective structure of the low-voltage cabinet 1, so that switches inside the low-voltage cabinet 1 can be protected when the low-voltage cabinet 1 is used outdoors. Further, maintenance and other operations are facilitated by directly opening the uncovered doors.

The prefabricated substation according to the embodiment of the present disclosure further includes a transformer 2 arranged inside the housing 4, as shown in Figure 1.

The cabinet body is further provided with an inoperable surface. The cabinet body is electrically connected to the transformer 2 through the inoperable surface. Specifically, the cabinet body is electrically connected to the transformer 2 by a connection copper bar 8. That is, one end of the connection copper bar 8 is electrically connected to the transformer 2, and the other end of the connection copper bar 8 is electrically connected to the low-voltage cabinet 1.

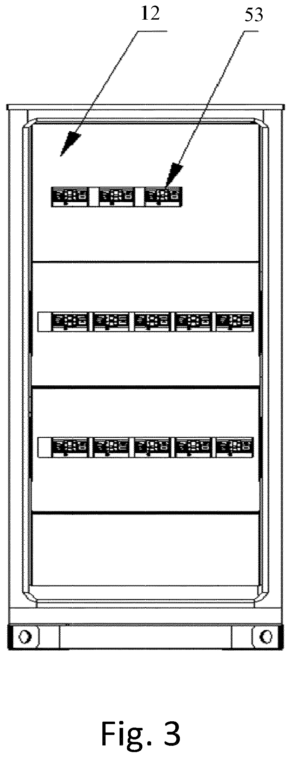

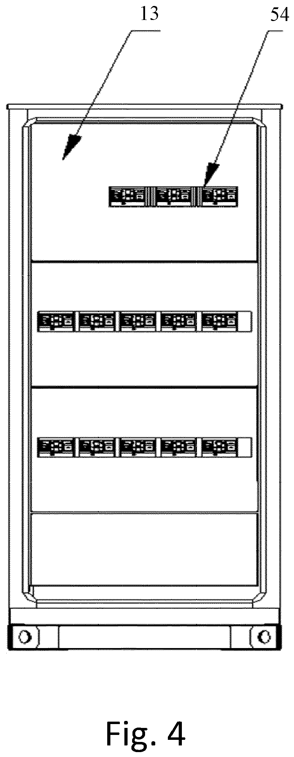

Further, the operable surface includes: a first operable surface 11, a second operable surface 12 and a third operable surface 13, as shown in Figures 2 to 4.

The first operable surface 11 is opposite to the inoperable surface. The second operable surface 12 and the third operable surface 13 are arranged on opposite sides of the first operable surface 11, respectively. According to the present disclosure, three operable surfaces each are provided with switches, which can make full use of all the operable surfaces, thereby maximizing the number of the switches and improving the capacity of the substation.

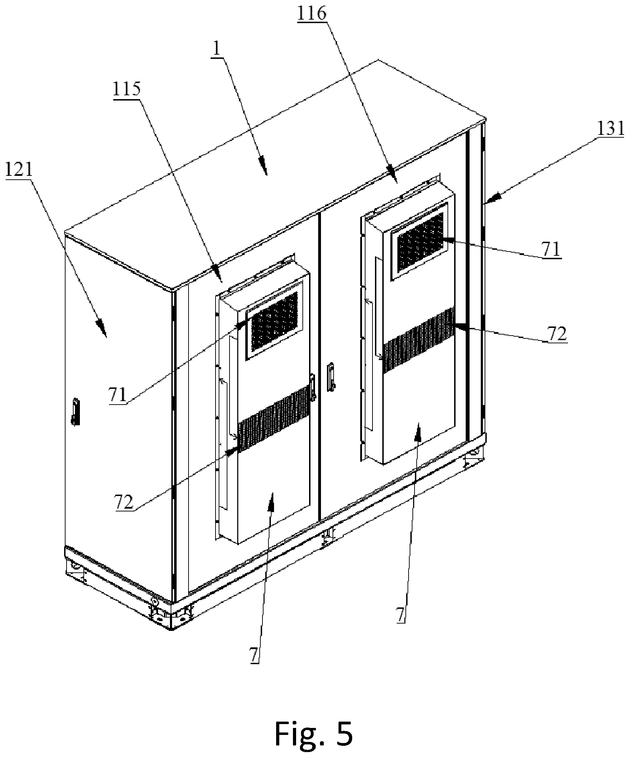

The door body includes a first door body arranged on the first operable surface 11, a second door body 121 arranged on the second operable surface 12, and a third door body 131 arranged on the third operable surface 13, as shown in Figure 5. It should be understood that the housing 4 is provided with an openable door at a position corresponding to an operable surface.

The first operable surface 11 includes a first area 111 and a second area 112. The first area 111 is close to the second operable surface 12. The second area 112 is close to the third operable surface 13. The first door body includes a first door 115 and a second door 116.

As shown in Figure 5, the first door 115 is arranged at the first area 111, and the second door 116 is arranged at the second area 112, facilitating maintenance and arrangement of switches.

In an embodiment, a molded case circuit breaker (that is, the safety switch) and an air circuit breaker that are electrically connected to each other are arranged inside the cabinet body, as shown in Figures 2 to 4.

The molded case circuit breaker includes first molded case circuit breakers 51 arranged in the first area 111, second molded case circuit breakers 52 arranged in the second area 112, third molded case circuit breakers 53 arranged on the second operable surface 12, and fourth molded case circuit breakers 54 arranged on the third operable surface 13.

The air circuit breaker includes a first air circuit breaker 61 arranged in the first area 111 and a second air circuit breaker 62 arranged in the second area 112. According to the present disclosure, the multiple molded case circuit breakers and the multiple air circuit breakers are arranged in the same low-voltage cabinet, so that the integration is improved. Therefore, the difficulty in arranging and connecting multiple low-voltage cabinets according to the conventional technology can be successfully overcome.

The first molded case circuit breakers 51 and the third molded case circuit breakers 53 are electrically connected to the first air circuit breaker 61. The second molded case circuit breakers 52 and the fourth molded case circuit breakers 54 are electrically connected to the second air circuit breaker 62.

Alternatively, the first molded case circuit breakers 51 are arranged in layers and the second molded case circuit breakers 52 are arranged in layers. First molded case circuit breakers 51 in a first layer and second molded case circuit breakers 52 in a first layer form a first layer of molded case circuit breakers 113. The first layer of molded case circuit breakers 113 and the third molded case circuit breakers 53 are electrically connected to the first air circuit breaker 61. First molded case circuit breakers 51 in a second layer and second molded case circuit breakers 52 in a second layer form a second layer of molded case circuit breakers 114. The second layer of molded case circuit breakers 114 and the fourth molded case circuit breakers 54 are electrically connected to the second air circuit breaker 62.

Alternatively, first molded case circuit breakers 51 in a first layer and second molded case circuit breakers 52 in a first layer form a first layer of molded case circuit breakers 113. The first layer of molded case circuit breakers 113 and the fourth molded case circuit breakers 54 are electrically connected to the first air circuit breaker 61. First molded case circuit breakers 51 in a second layer and second molded case circuit breakers 52 in a second layer form a second layer of molded case circuit breakers 114. The second layer of molded case circuit breakers 114 and the third molded case circuit breakers 53 are electrically connected to the second air circuit breaker 62. That is, the molded case circuit breaker may be electrically connected to the air circuit breaker in various manners, depending on applications.

Furthermore, the door body is provided with a heat exchanger 7 for cooling the cabinet body, so as to meet the requirements of the low-voltage cabinet 1.

In an embodiment, the heat exchanger 7 is a countercurrent heat exchanger. The heat exchanger 7 is provided with an air inlet 71 and an air outlet 72 for external circulation. An air outlet 91 and an air inlet 92 for internal circulation are provided inside the cabinet body. A direction in which air flows through the air inlet 71 and the air outlet 72 is opposite to a direction in which air flows through the air outlet 91 and the air inlet 92. Heat exchange is performed at a core of the heat exchanger to achieve heat dissipation.

The prefabricated substation according to the embodiment of the present disclosure further includes: a ring main unit 3, as shown in Figure 1. The ring main unit 3 is arranged inside a medium-voltage power distribution chamber in the housing 4.

The ring main unit 3 is an indoor cabinet, and the medium-voltage power distribution chamber is enclosed. Alternatively, the ring main unit 3 is an outdoor cabinet, that is, having a protective structure, and thus is unnecessarily protected by the housing 4. Therefore, the medium-voltage power distribution chamber is a structural frame, that is, without being enclosed, thereby increasing available space.

The present disclosure is further described in conjunction with the detailed embodiments.

A prefabricated substation is provided according to the present disclosure. The prefabricated substation includes a low-voltage cabinet 1, a transformer 2, a ring main unit 3 and a housing 4. The low-voltage cabinet 1 is an outdoor cabinet, and therefore can be used outdoors without additional protection. Each of a front side, a left side and a right side of the low-voltage cabinet 1 is provided with an operable surface. Each of the left side and the right side is provided with an openable hinged door, and the front side is provided with double hinged doors. The operable surface (that is, a first operable surface 11) on the front side is divided into a left half area (that is, the first area 111) and a right half area (that is, the second area 112). The left half area is provided with multiple first molded case circuit breakers 51 arranged in two layers. A first air circuit breaker 61 is arranged above the first molded case circuit breakers 51. The right half area is provided with multiple second molded case circuit breakers 52 arranged in two layers. A second air circuit breaker 62 is arranged above the second molded case circuit breakers 52. The first layer of the first molded case circuit breakers 51 is level with the first layer of the second molded case circuit breakers 52. The second layer of the first molded case circuit breakers 51 is level with the second layer of the second molded case circuit breakers 52. The first air circuit breaker 61 is arranged at the same height as the second air circuit breaker 62. The operable surface (that is, the second operable surface 12) on the left side is provided with multiple third molded case circuit breakers 53 arranged in at least two layers, for example, two layers, three layers, or the like. The operable surface (that is, a third operable surface 13) on the right side is provided with multiple fourth molded case circuit breakers 54 arranged in at least two layers, for example, two layers, three layers, or the like.

The first molded case circuit breakers 51 in the left half area and all the third molded case circuit breakers 53 on the operable surface on the left side are electrically connected to the first air circuit breaker 61 by cables or copper bars. The second molded case circuit breakers 52 in the right half area and all the fourth molded case circuit breakers 54 on the operable surface on the right side are electrically connected to the second air circuit breaker 62 by cables or copper bars.

In another embodiment, the first layer of molded case circuit breakers 113 (including molded case circuit breakers in the first layer in the left half area and molded case circuit breakers in the first layer in the right half area) arranged on the operable surface on the front side and the third molded case circuit breakers 53 on the operable surface on the left side are electrically connected to the first air circuit breaker 61 by cables or copper bars. The second layer of molded case circuit breakers 114 (including molded case circuit breakers in the second layer in the left half area and molded case circuit breakers in the second layer in the right half area) on the operable surface on the front side and the fourth molded case circuit breakers 54 on the operable surface on the right side are electrically connected to the second air circuit breaker 62 by cables or copper bars.

In another embodiment, the first layer of molded case circuit breakers 113 (including molded case circuit breakers in the first layer in the left half area and molded case circuit breakers in the first layer in the right half area) arranged on the operable surface on the front side and the fourth molded case circuit breakers 54 on the operable surface on the right side are electrically connected to the first air circuit breaker 61 by cables or copper bars. The second layer of molded case circuit breakers 114 (including molded case circuit breakers in the second layer in the left half area and molded case circuit breakers in the second layer in the right half area) on the operable surface on the front side and the third molded case circuit breakers 53 on the operable surface on the left side are electrically connected to the second air circuit breaker 62 by cables or copper bars.

Two doors (that is, the first door body) on the front side of the low-voltage cabinet each are provided with a heat exchanger 7 for cooling the low-voltage cabinet. The heat exchanger 7 is a countercurrent heat exchanger. The countercurrent heat exchanger is provided with an air inlet 71 and an air outlet 72 outside the low-voltage cabinet for external circulation, and is provided with an air inlet 92 and an air outlet 91 inside the low-voltage cabinet for internal circulation. A direction in which air flows for the external circulation is opposite to a direction in which air flows for the internal circulation. Heat exchange is performed at a core of the heat exchanger to achieve heat dissipation.

Alternatively, the door body on the left side (that is, the second door body 121) and the door body on the left side (that is, the third door body 131) each are provided with an heat exchanger. In this case, the operable surface on the left side and the operable surface on the right side each are provided with an air inlet and an air outlet for internal circulation accordingly.

The transformer 2 may be a European oil immersed transformer. A winding of the transformer is immersed in oil in an oil tank for insulation and heat dissipation. A radiator is arranged outside the oil tank.

The ring main unit 3 is an SF6 gas insulated CCV ring main unit or CV ring main unit, V represents a power receiving cabinet, and C represents a power distribution cabinet. The ring main unit may be an indoor cabinet or an outdoor cabinet.

The low-voltage cabinet 1, the transformer 2 and the ring main unit 3 are fixed inside the housing 4, for integration. The housing 4 matches a standard shipping container in size, for example, 20 feet, in order to meet the requirements of marine transportation. The low-voltage cabinet 1 is an outdoor cabinet, and the transformer 2 can be used outdoors directly. Therefore, a part of the housing 4 where the low-voltage cabinet 1 and the transformer 2 are arranged is a structural frame without additional protection. In a case that the ring main unit 3 is an indoor cabinet, a part of the housing where the ring main unit 3 is arranged is enclosed, so as to protect the ring main unit when used outdoors. In this case, the housing 4 is provided with an openable door beside the ring main unit so as to facilitate operation and maintenance of the ring main unit. In a case that the ring main unit 3 is an outdoor cabinet, a part of the housing where the ring main unit 3 is arranged is a structural frame without being enclosed.

The low-voltage cabinet 1 is electrically connected to the transformer 2 by the connection copper bar 8. That is, one end of the connection copper bar 8 is electrically connected to the transformer, and the other end of the connection copper bar 8 is electrically connected to the low-voltage cabinet. The connection copper bar 8 is electrically connected to the low-voltage cabinet at an output terminal of the first air circuit breaker 61 and an output terminal of the second air circuit breaker 62. That is, the first air circuit breaker 61 and the second air circuit breaker 62 are electrically connected to the transformer 2 by the connection copper bar 8, so that low-voltage currents all flow into the transformer 2. The transformer 2 is electrically connected to the ring main unit 3 by medium voltage cables.

Each molded case circuit breaker in the low-voltage cabinet 1 is connected to an alternating-current output end of a string inverter. Therefore, low-voltage alternating-current power outputted by the string inverter is transferred to the low-voltage cabinet, converge at respective air circuit breakers, and then is transferred to the transformer through the connection copper bar. The transformer is configured to convert the low-voltage alternating-current power into high-voltage alternating-current power, and the high-voltage alternating-current power is transferred to a power grid through the ring main unit.

In summary, in the prefabricated substation according to the embodiments of the present disclosure, the low-voltage cabinet is an outdoor low-voltage cabinet, and switches are arranged on the front side, the left side and the right side of the low-voltage cabinet, so that operable surfaces on the three sides are fully used, and the number of the switches is maximized. Switches on the front side are arranged in two layers, and switches on each of the left side and the right side are arranged in at least two layers. Switches in the left half area of the front side and switches on the left side are electrically connected to the second air circuit breaker. Switches in the right half area of the front side and switches on the right side are electrically connected to the second air circuit breaker. Switches in the first layer on the front side and switches on the left side are electrically connected to the second air circuit breaker. Switches in the second layer on the front side and switches on the right side are electrically connected to the second air circuit breaker. Alternatively, switches in the first layer on the front side and switches on the right side are electrically connected to the first air circuit breaker, and switches in the second layer on the front side and switches on the left side are electrically connected to the second air circuit breaker. The doors on the front side of the low-voltage cabinet each is provided with a heat exchanger, or the doors on left and right sides of the low-voltage cabinet each is provided with a heat exchanger, facilitating dissipation of heat inside the low-voltage cabinet. The part of the housing where the low-voltage cabinet is arranged is a structural frame without being enclosed. In a case that the ring main unit is an outdoor cabinet, the housing is a structural frame as a whole, thereby making full use of the space on the low-voltage side and effectively reducing costs.

The embodiments in this specification are described in a progressive manner. Each embodiment focuses on differences from other embodiments. The same and similar parts between the embodiments are referred to each other.

Based on the above descriptions of the disclosed embodiments, those skilled in the art may implement or carry out the present disclosure. Various modifications made to these embodiments are apparent for those skilled in the art, and the general principle defined herein may be implemented in other embodiments without departing from spirit or scope of the present disclosure. Therefore, the present disclosure is not limited to the embodiments described herein, but confirms to the widest scope consistent with the principles and novel features disclosed herein.

## Claims

1. A prefabricated substation, comprising:
a low-voltage cabinet (1); and
a housing (4), wherein the housing (4) comprises a low-voltage chamber for accommodating the low-voltage cabinet (1); and the low-voltage cabinet (1) is an outdoor cabinet, and the low-voltage chamber is a structural frame.

2. The prefabricated substation according to claim 1, wherein the low-voltage cabinet (1) comprises:
a cabinet body, the cabinet body is provided with an operable surface, and
a door body, wherein the door body is arranged on the operable surface and is uncovered.

3. The prefabricated substation according to claim 2, further comprising:
a transformer (2) arranged in the housing (4), wherein the cabinet body is further provided with an inoperable surface, and the cabinet body is electrically connected to the transformer (2) through the inoperable surface.

4. The prefabricated substation according to claim 3, wherein the operable surface comprises:
a first operable surface (11);
a second operable surface (12); and
a third operable surface (13), wherein the first operable surface (11) is opposite to the inoperable surface; and the second operable surface (12) and the third operable surface (13) are arranged on opposite sides of the first operable surface (11), respectively, and
wherein the door body comprises: a first door body arranged on the first operable surface (11), a second door body (121) arranged on the second operable surface (12), and a third door body (131) arranged on the third operable surface (13).

5. The prefabricated substation according to claim 4, wherein
the first operable surface (11) comprises a first area (111) and a second area (112), and the first door body comprises a first door (115) and a second door (116), wherein the first door (115) is arranged in the first area (111), and the second door (116) is arranged in the second area (112).

6. The prefabricated substation according to claim 5, wherein a molded case circuit breaker and an air circuit breaker are arranged in the cabinet body, and wherein
the molded case circuit breaker comprises first molded case circuit breakers (51) arranged in the first area (111), second molded case circuit breakers (52) arranged in the second area (112), third molded case circuit breakers (53) arranged on the second operable surface (12), and fourth molded case circuit breakers (54) arranged on the third operable surface (13); and
the air circuit breaker comprises a first air circuit breaker (61) arranged in the first area (111) and a second air circuit breaker (62) arranged in the second area (112).

7. The prefabricated substation according to claim 6, wherein
all the first molded case circuit breakers (51) and the third molded case circuit breakers (53) are electrically connected to the first air circuit breaker (61), and all the second molded case circuit breakers (52) and the fourth molded case circuit breakers (54) are electrically connected to the second air circuit breaker (62); or
the first molded case circuit breakers (51) are arranged in layers, the second molded case circuit breakers (52) are arranged in layers, the first molded case circuit breakers (51) in a first layer and the second molded case circuit breakers (52) in a first layer form a first layer of molded case circuit breakers (113), and the first molded case circuit breakers (51) in a second layer and the second molded case circuit breakers (52) in a second layer form a second layer of molded case circuit breakers (114), wherein
the first layer of molded case circuit breakers (113) and the third molded case circuit breakers (53) are electrically connected to the first air circuit breaker (61), and the second layer of molded case circuit breakers (114) and the fourth molded case circuit breakers (54) are electrically connected to the second air circuit breaker (62); or
the first layer of molded case circuit breakers (113) and the fourth molded case circuit breakers (54) are electrically connected to the first air circuit breaker (61), and the second layer of molded case circuit breakers (114) and the third molded case circuit breakers (53) are electrically connected to the second air circuit breaker (62).

8. The prefabricated substation according to any one of claims 2 to 6, wherein the door body is provided with a heat exchanger (7) for cooling the cabinet body.

9. The prefabricated substation according to claim 8, wherein
the heat exchanger (7) is a countercurrent heat exchanger and is provided with an air inlet (71) and an air outlet (72) for external circulation; and
an air outlet (91) and an air inlet (92) for internal circulation are provided inside the cabinet body, wherein a direction in which air flows through the air inlet (71) and the air outlet (72) is opposite to a direction in which air flows through the air outlet (91) and the air inlet (92).

10. The prefabricated substation according to claim 5, further comprising:
a ring main unit (3) arranged inside a medium-voltage power distribution chamber in the housing (4), wherein
the ring main unit (3) is an indoor cabinet, and the medium-voltage power distribution chamber in enclosed; or
the ring main unit (3) is an outdoor cabinet, and the medium-voltage power distribution chamber is a structural frame.
